# EUROPEAN PATENT APPLICATION

(11) **EP 1 865 662 A1**
(43) Date of publication of application: **12.12.2007**
(21) Application number: 06011822.1
(22) Date of filing: 08.06.2006
(51) Int. Cl.: H04L 12/28, H04L 12/46

(54) **Connection method and system for delivery of services to customers**

(71) Applicant: Koninklijke KPN N.V., 2516 CK The Hague (NL)
(72) Inventor: Ter Steege, Jan Willem, 7315 BR Apeldoorn (NL)
(74) Representative: Wuyts, Koenraad Maria

(57) **Abstract**

The invention relates to a method for connecting a plurality of customer termination units to a central unit via a network for delivering services from a plurality service providers to a plurality of customers. The method involves providing a fiber infrastructure for said network between said central unit and said plurality of customer termination units. An Ethernet connection is arranged over said fiber infrastructure between said central unit comprising a first Ethernet connection interface and said customer termination units. Access is provided for said service providers at said first Ethernet connection interface for delivering said services to said plurality of customers. The invention also relates to system arranged for delivering services from a plurality of providers to a plurality of customers.

## Description

### FIELD OF THE INVENTION

In general, the invention relates to the field of service provision to customers via a network. In particular, the invention relates to a method and system for the delivery of services, such as voice, internet and/or television services, over a network to customers from a plurality of service providers.

### BACKGROUND OF THE INVENTION

During the last decades, the requirements of customers with respect to the ability to receive and the quality of information services (telephone, internet, television, radio) have increased considerable. To that end, fiber infrastructures have been installed. Fiber networks hold the promise of nearly unlimited bandwidths and are therefore particularly suitable for meeting the customer requirements with respect to the quantity and quality of the services.

In the art, several parties have taken initiatives to provide fiber networks. In general, these parties financed the initiatives and hired other parties to roll out the fiber network. The fiber networks were then rented to operators of the networks. Potential customers were approached by the operator and, typically, the operator also provides the services to the customers. In some cases, other service providers were allowed to provide services to the customers. However, in these prior art initiatives, the business model remains rather closed. The operator of the network is clearly visible for the customers and the possibilities for individual service providers to distinguish themselves are limited.

### SUMMARY OF THE INVENTION

It is an object of the invention to provide a connection method and system for delivery of services to customers, wherein individual service providers may distinguish themselves.

To that end, a method is proposed for connecting a plurality of customer termination units to a central unit via a network for delivering services from a plurality service providers to a plurality of customers. The method involves providing a fiber infrastructure for said network between said central unit and said plurality of customer termination units. An Ethernet connection is arranged over said fiber infrastructure between said central unit comprising a first Ethernet connection interface and said customer termination units. Access is provided for said service providers at said first Ethernet connection interface for delivering said services to said plurality of customers.

Furthermore, a system is proposed that is arranged for delivering services from a plurality of providers to a plurality of customers. The system comprises a central unit and a plurality of customer termination units. A fiber infrastructure is arranged between said central unit and said customer termination units. An Ethernet connection is provided with an Ethernet connection interface at said central unit. The service providers have access to said Ethernet connection interface for providing said services.

The fiber network provides for a universal carrier for a plurality of services. By providing access for the service providers to this network on Ethernet level, the operator of the network responsible for arranging the Ethernet connection remains invisible for the customers, whereas the service providers can distinguish themselves on layers above the data link layer. In other words, the connection method makes the network transparent. Various service providers may make use of the universal carrier and distinguish themselves by offering a specific service, quality etc. On the other hand, the customer is not limited in his choice for a service provider by a network operator. Each service provider can provide services by simply connecting to the first Ethernet connection interface.

Another advantage of the proposed connection method and system is that the operator responsible for arranging the Ethernet connection can guarantee a Quality of Service (QoS) for a particular service provider. This is a result of the fact that Consequently, the service provider is capable of assuring potential customers of a specific service quality, e.g. a data rate for internet traffic.

The embodiment of the invention as defined in claim 2 ensures optimal control for the operator on the physical layer and data link layer of the system, such that fiber infrastructures connected as proposed in the present application have an improved chance of realization. On the other hand, by allowing the operator only to arrange for an Ethernet connection and to leave higher layers, e.g. the network layer, open for the service providers, multiple service providers are enabled to distinguish themselves before their customers.

The embodiment of the invention as defined in claim 3 has the advantage that multiple service providers may easily obtain access to the fiber infrastructure to provide their services.

The embodiment of the invention as defined in claim 4 ensures that customers are approached by parties that have knowledge of the market or have a customer base and that have an interest in connecting these customers to the network. As an example, the value of the buildings may increase as a result of the connection to the fiber infrastructure.

The embodiment of the invention as defined in claim 5 obviates the need for the operator of the network to deal with customers on an individual basis. Service providers may e.g. make arrangement for billing or a helpdesk.

The embodiments of the invention as defined in claims 6 and 11 provides for the advantage that service providers may themselves decide on the level they use for getting access to their customers. The arrangement allows for local, regional and national service providers.

The embodiment of the invention as defined in claims 7 and 12 allows for providing local content to customers. As an example, a building with 200 apartments may have it's own television channel if the customer termination units of this building are connected to the same central unit.

The embodiments of the invention as defined in claims 8 and 9 provide examples of how individual service providers may distinguish themselves to their customers.

It should be noted that the above defined embodiments, and aspects thereof, may be combined.

The invention will be further illustrated with reference to the attached drawings, which schematically show a preferred embodiment according to the invention. It will be understood that the invention is not in any way restricted to this specific and preferred embodiment.

### BRIEF DESCRIPTION OF THE DRAWINGS

In the drawings:
FIGS. 1A and 1B illustrate the difference between the prior art connection method and the connection method according to an embodiment of the invention in terms of the layers of the OSI reference model;
FIG. 2 shows a network infrastructure according to an embodiment of the invention, and
FIG. 3 shows a building connected to the network infrastructure of FIG. 2.

### DETAILED DESCRIPTION OF THE DRAWINGS

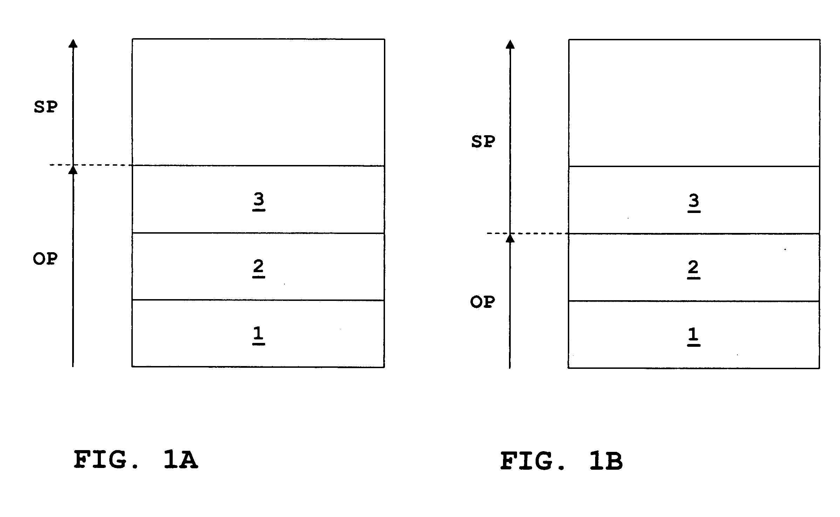

The OSI reference model is a descriptive model well known to the person skilled in the art. The model comprises several layers, some of which are shown in FIGS. 1A and 1B.

Layer 1 refers to the physical layer, i.e. the passive fiber infrastructure.

Layer 2 refers to the data link layer. The data link layer provides the functional and procedural means to transfer data between network entities and to detect and possibly correct errors that may occur in the physical layer. Ethernet is a frame-based network technology for local area networks (LANs) on layer 2. It defines wiring and signaling for the physical layer and frame formats and protocols for the data link layer of the OSI model. Ethernet is mostly standardized in IEEE 802.3.

Layer 3 refers to the network layer that provides functional and procedural means of transferring data over a network. The network layer performs network routing, flow control and error control functions.

Higher layers refer, amongst other things, to services provided over the network.

The OSI reference model of FIG. 1A illustrates the situation according to the prior art. A network operator OP provides access to a service provider SP on layer 3.

FIG. 1B illustrates the connection method according to an embodiment of the invention. Service providers SP may access the fiber infrastructure on layer 2 by connecting to an Ethernet connection interface of the operator OP.

In the connection method of FIG. 1B, the service providers SP are allowed to connect their own IP devices and customer functional units, such as set top boxes. Accordingly, the service providers are visible to the customers and the network operator only provides a universal carrier for the services of various service providers. The connection method of FIG. 1B provides access to a single fiber infrastructure for a virtually unlimited amount of service providers SP, whereas each service provider remains visible to the customer.

Moreover, the Quality of Service (QoS) for a service provider is guaranteed since the service provider has a reserved virtual bandwidth. Connection on layer 3 in accordance with the prior art does not provide for such an advantage, since each service providers uses the totally available bandwidth using IP routing for services of each service provider SP. Therefore, in the prior art service providers are discouraged from making statements on the quality of their services towards their customers.

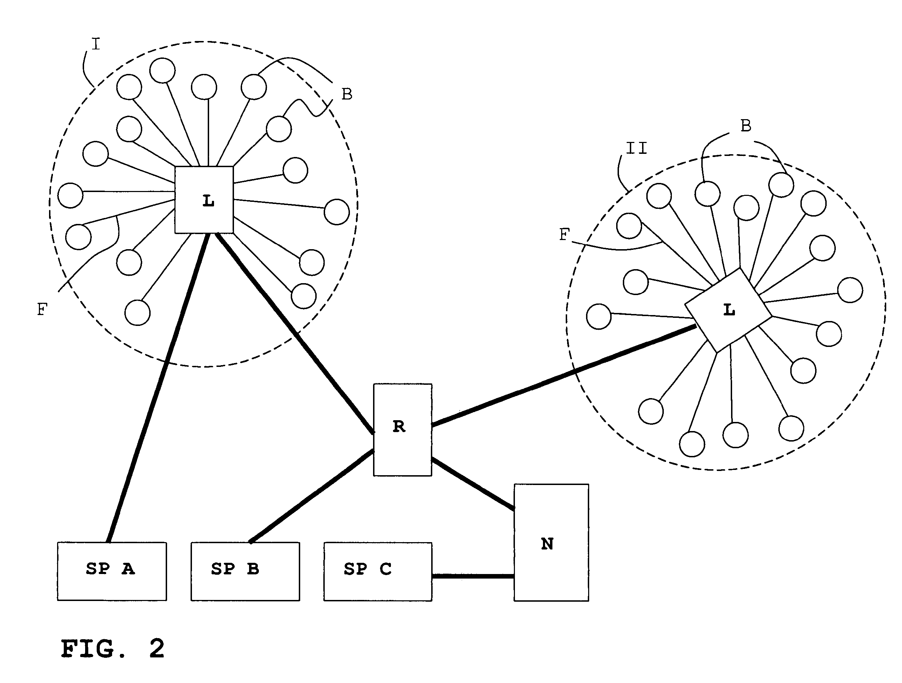

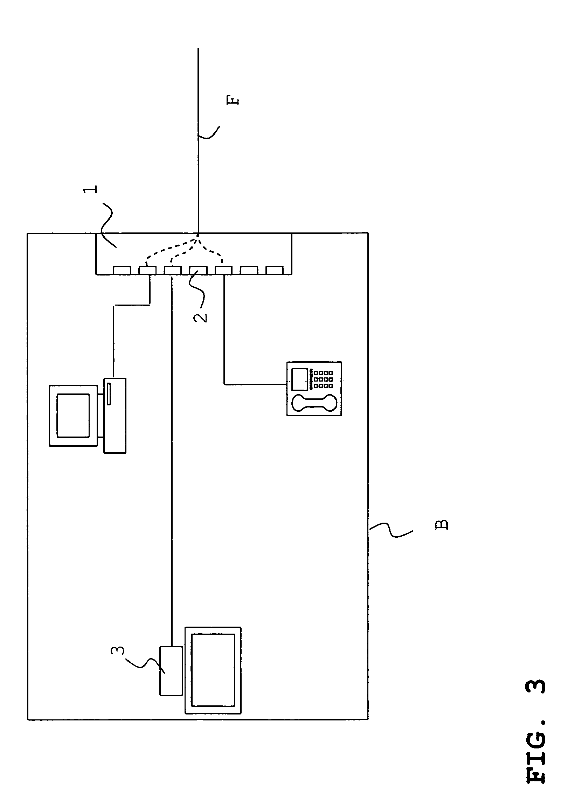

FIGS. 2 and 3 display a system arranged for delivering services from a plurality of service providers SP A, SP B, SP C to a plurality of customers, indicated by buildings B. The system comprises a central unit L for each local area I, II, indicated by the dashed circles. Each building B comprises a customer termination unit 1. A fiber network F is arranged between the central unit L of a local area I, II and the customer termination units 1 within said area.

As an example, a central unit L of a local area I, II may serve e.g. 200 till 300 buildings B.

The fiber network F (the physical layer in the OSI model of FIG. 1B) comprises a star network of single mode, single fiber network capable of providing e.g. a 100 Mbps or 1 Gbps symmetric connection.

The operator OP of the network F arranges an Ethernet connection over the fiber network F. The operator OP of the network F offers VLAN connections to the service providers SP A, SP B and SP C for offering their services over the fiber network F to the customers in buildings B. To that end, the service providers SP A, SP B and SP C have access to a Ethernet connection interface in the central unit L of each area I, II.

The access to the central unit L of each area may be arranged in various ways.

In the example of FIG. 2, service provider SP A connects directly to the central unit L of local area I. Consequently, service provider SP A only serves customers in local area I. Thus, service provider SP A may specialize in offering content of interest for local area I.

Service provider SP B is a regional service provider and desires not to connect to each individual local central unit L. Instead, service provider SP B desired to connect to a regional unit R, which may e.g. be a switch for an entire city. The regional unit R is connected to the various local central units L, as illustrated schematically in FIG. 2.

Service provider SP C is a national service provider that connects to a national unit N for access to the local central units L.

Service provider SP A may e.g. offer local television, service provider SP B may e.g. offer regional television and internet services, whereas service provider SP C may offer telephony services and national television.

The operator OP offers VLAN's that are available for each service provider SP A, SP B and SP C via a wholesale agreement. These VLAN's can be used to offer services to the customers of the service provider.

As mentioned above, each building B comprises a customer termination unit 1 that terminates the fiber F for that building and converts the signal of the fiber network into an electrical signal. The customer termination unit 1 provides a plurality of connectors 2, e.g. RJ 45 connector, for connecting customer functional units 3. The customer functional units 3 may include a set/top box, a computer component and a telephone, as shown in FIG. 3. The customer termination unit 1 is part of the data link layer 2 and is therefore provided by the operator OP. The customer functional units 3, such as the set/top box, may be provided by the service provider SP C. Therefore, the service provider SP C is visible for the customer and retail relationships including billing, servicing and helpdesk services may be maintained by the service provider SP C.

Finally, for attracting customers to connect to the network described above, local parties may be used to advantage. In particular, housing corporations, project developers engaged in building houses etc. may add value to their products and have a significant customer base to be useful in marketing the connection method and system for delivery of services.

## Claims

1. A method of connecting a plurality of customer termination units to a central unit via a network for delivering services from a plurality service providers to a plurality of customers, said method comprising the steps of:
- providing a fiber infrastructure for said network between said central unit and said plurality of customer termination units;
- arranging an Ethernet connection over said fiber infrastructure between said central unit comprising a first Ethernet connection interface and said customer termination units comprising corresponding second Ethernet connection interfaces, and
- providing access for said service providers at said first Ethernet connection interface for delivering said services to said plurality of customers.

2. The method according to claim 1, wherein said fiber infrastructure is owned by an owner and said owner only arranges said Ethernet connection over said fiber infrastructure.

3. The method according to claim 2, further comprising the step of offering one or more virtual local area networks (VLAN's) by said owner to said service providers by means of wholesale agreements.

4. The method according to claim 1, wherein said customer termination units are located in buildings belonging to at least one party or built by at least one party, further comprising the step of said party approaching said customers for connection to said network.

5. The method according to claim 1, further comprising the step of said service providers maintaining a retail relationship with said customers.

6. The method according to claim 1, wherein said central unit is a local central unit and said local central unit is connected to at least one of a regional unit and a national unit, further comprising the step of at least one of said service providers accessing said first Ethernet connection interface via said local central unit, said regional unit or said national unit.

7. The method according to claim 6, wherein at least one of said service providers accesses said local central unit or regional unit to provide local services to said customers.

8. The method according to claim 1, further comprising the step of providing customer functional units by said service providers for connection to said customer termination units.

9. The method according to claim 1, wherein said services include voice, internet and television services.

10. A system arranged for delivering services from a plurality of service providers to a plurality of customers, comprising:
- a central unit
- a plurality of customer termination units
- a fiber infrastructure arranged between said central unit and said customer termination units providing an Ethernet connection with an Ethernet connection interface at said central unit,
wherein said service providers have access to said Ethernet connection interface for providing said services.

11. The system according to claim 10, wherein said central unit is a local central unit and said local central unit is connected to at least one of a regional unit and a national unit and wherein at least one of said service providers is connected to said Ethernet connection interface via said local central unit, said regional unit or said national unit.

12. The system according to claim 10, wherein said central unit is a local central unit and at least one of said service providers is connected to said local central unit or regional for providing local services.
